(19) **Europäisches Patentamt**
**European Patent Office**
**Office européen des brevets**

(11) **EP 3 493 085 A1**

(12) **EUROPEAN PATENT APPLICATION**

(43) Date of publication:
**05.06.2019 Bulletin 2019/23**

(51) Int Cl.:
**G06F 17/40** *(2006.01)*     *G06F 11/07* *(2006.01)*
**G06F 11/34** *(2006.01)*

(21) Application number: **17204748.2**

(22) Date of filing: **30.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Royal Holloway And Bedford New College**
**Egham, Surrey TW20 0EX (GB)**

(72) Inventor: **The designation of the inventor has not yet been filed**

(74) Representative: **J A Kemp**
**14 South Square**
**Gray's Inn**
**London WC1R 5JJ (GB)**

(54) **AUTOMATED LOGGING**

(57) An automated method of creating a log of events, the method comprising:
receiving an activity log comprising a series of commands performed by a data processing system;
determining, by reference to an entity map of the data processing system, impacted entities, an impacted entity being an entity relating to an affected data record, an affected data record being a record with which a command of the activity log has interacted;
constructing event-impact records each relating a command, an affected data record and an entity.

Fig. 1

**Description**

FIELD OF THE INVENTION

The present invention relates to methods and systems for automatically monitoring the state of a device, in particular to automatically logging the activities of a data processing system.

BACKGROUND

Most data processing systems, especially database systems, automatically generate logs of their activities. These are often in the form of a list of commands, and/or command & attributes, executed by the system and are output in a sequential file. The result of the execution, such as an error state or confirmation of successful completion, can also be included. All actions are listed in sequential order either by time or actual occurrence. Below is an example of some entries from a general query log produced by the MySQL database system:

```
131021 17:43:50 43 Connect root@localhost as anonymous on pnet_blog

                43 Init DB pnet_blog
                43 Query SELECT count(id) as total_posts FROM posts WHERE date_published is not null AND date_published
                <= '20131021144350'
                43 Query SELECT * FROM posts WHERE date_published is not null AND date_published <= '20131021144350'
                ORDER BY date_published DESC LIMIT 0,10
                44 Connect root@localhost as anonymous on pnet blog
                44 Query SELECT id, title, impressions FROM tips WHERE date_published IS NOT NULL AND date_published
                <= '20131021144350' ORDER BY date_published DESC LIMIT 0, 10
                44 Quit
```

It will be seen that a simple database query generates several log entries. Even quite straightforward transactions will generate many log entries so that log files in transactional systems quickly become very large.

Use of this type of sequential log was originally limited to specific cases, for example forensic examination after a compromise event that reveals data or for diagnosing faults or errors when a database fails. Such events are relatively rare, therefore computational effort applied to create the log is minimised at the expense of computational effort when diagnosis is required and the data structures in which activity logs are stored are non-optimised for large data set operations. Because information regarding the impact or causality of the actions is not recorded, to determine that impact at a later date using such logs is an inefficient and costly process. If analysis of the impact of activities executed by the system is required frequently, then the same log entries may be processed repeatedly.

SUMMARY

An aim of the invention is to provide an improved method and system for automatically logging activities of a data processing system.

According to the present invention, there is provided an automated method of creating a log of events, the method comprising:

receiving an activity log comprising a series of commands performed by a data processing system;
determining, by reference to an entity map of the data processing system, impacted entities, an impacted entity being an entity relating to an affected data record, an affected data record being a record with which a command of the activity log has interacted;
constructing event-impact records each relating a command, an affected data record and an entity.

Accordingly, the present invention provides a transformation technique that revolutionises the way activity logs are constructed. Embodiments of the present invention can capture the impact an activity had on data-assets and not simply record the activity. Activity logs in existing formats are transformed into a data structure representing causality-relationships (event-impact chain) that enables efficient search and analysis of activities performed by/on entities. The transformation is independent of data input (logs) and output storage technologies. The logs can be communicated to an embodiment of the invention either in real-time or as batch files.

An embodiment of the invention takes an entity map (a representation of the entities that are required to be tracked and attributes that represent these entities) and builds the causality-relationship, depicted in an event-impact chain. The event-impact chain shows the history of operations performed and how they impacted a particularly an entity.

A transformation that translates an action-record into a causal relationship with entity as the main focus is referred to herein as entity based provenance.

BRIEF DESCRIPTION OF THE DRAWINGS

The invention is described below with reference to exemplary embodiments and the accompanying drawings, in which:

Figure 1 is a schematic diagram of an embodiment of the invention in a production database system;
Figure 2 illustrates a method according to an embodiment of the invention;
Figure 3 illustrates another method according to an embodiment of the invention; and
Figure 4 is a more detailed schematic diagram of an embodiment of the invention.

In the various figures, like parts are denoted by like references.

DETAILED DESCRIPTION OF EMBODIMENTS

The present invention provides an algorithm for building a causality-relationship for activities (which may also be described as actions) carried out on a digital platform. These actions and their related impacts in the context of an entity are captured and represented as a causality chain (event-impact chain) logically bundled per individual entity. The event-impact chain comprises a plurality of event-impact records which relate a command, an affected record and an entity. Event-impact records may include additional information, such as a time-stamp, a serial number or information as to computing device(s) and/or user(s) initiating or processing the command.

For the purposes of the present invention, an "entity" is anything that it is desired to track. An entity is a construct about which a data processing system collects, stores and processes data. For example, customers, employees, company-cars, etc. An entity may be a physical object or a virtual object or a combination or assembly of objects. An entity may be an object within the database itself. The present invention does not require the data processing system in which the invention is applied to have a specific structure. However, the invention may be easier to implement and/or more effective if based on an object-oriented data processing system described by, for example, an entity-relationship model, a Unified, Modelling Language class diagram, etc..

An activity (or action) performed by the data processing system is any occurence that interacts with one or more data records relating to one or more entities in the collection. An activity may comprise creating, modifying, reading, moving or deleting all or part of a field, a record, an index or a pointer. In a data processing system that stores multiple copies or replicas of all or part of a database, the activity may interact with any one of such copies or replicas. An activity may interact with cached data just as with data in a main store. An activity can relate to the internal activities of the data processing system itself, such as copying, backing up or archiving records. Also, an activity can relate to an action of a computing system, such as: sending a message, displaying information, allowing access to a system, etc.. An activity can also relate to an action or event in the real world, such as the opening of a door, the operation of a machine or the movement of a vehicle. A real world action or event can be automatically detected by a sensor or effected by an actuator.

To enable efficient post-event operations (like audit, compliance, access-to-record, proof of right-to-forget, etc.) an embodiment of the present invention transforms the event log into a causality-relationship that focuses on an entity's perspective. This is also referred to herein as entity centric provenance (ECP). To build ECP, the present invention emulates the activity and observes/traverses its path and records its impacts. This helps to build an accurate picture of event-impact chain.

The ECP provides a rich representation of how, when, what, and where an activity was performed and what was the impact on a particular entity.

In ECP the event logs are transformed into a causality-relationship between an action and impact in the context of an entity. For example, an agent performs an action (operation) on a data that would impact an entity; the causality-relationship is built as Action performed by Agent on Data with impact on Entity

$$(Action_{Agent} \xrightarrow{Performed\ on} Data \xrightarrow{Impacting} Entity)$$ with focus on entity. For this causality-relationship, the transformation performs predictive analysis to assess the 'performed on' and 'impacting' element of the relationship to

- correctly identify the entity,
- either add this relationship as an atomic relationship or assess whether it is a continuation of a causality chain (a collection of causality-relationships that connects together a sequence of events and their impacts) and

- logically bundle the causality-relationships set relevant to each entity and preserve this in a long-term storage.

An atomic relationship is one that is finalised; all related changes and/or transactions have been effected and the casuality relationship is complete.

The transformation provides a structure based on logical bundles that are collections of causality-relationships about individual entities, which in turn enable an optimised way to track, manage and verify data flows, accesses and manipulations in an efficient and cost-effective manner. The present invention enables efficient monitoring or data use and/or data integrity independently of the meaning or semantic content of the data. The present invention can be used to monitor the activity of the database and automatically provide information as to the internal state and past history of the data processing system.

Issues with existing systems include:

- They focus on actions and carry out no impact analysis.
- The event logs in storage have no links with each other, so to perform impact analysis (actions performed on an entity) requires traversing all possible events to build a picture).
- Event logs are static representations of what happened or actions carried out at a point-in-time in the past without capturing any additional information. This limits their utility to enable understanding of actual impacts and to build an accurate report on how data was used while it was retained by an organisation.

The latter limitation is explained by the following example: if a query such as 'list the customers with balance below £10' was performed on 23 December 2014; i) the query event in the log file will not list the customers that satisfied this query condition and ii) if, at a later date, it is desired to find the list of customers that satisfied that query, it is necessary to first build the state of the database at 23 December 2014, which would be difficult, if not impossible, as it would require a roll back of the whole database. Thus, a full impact analysis is nearly impossible to achieve in the existing log system.

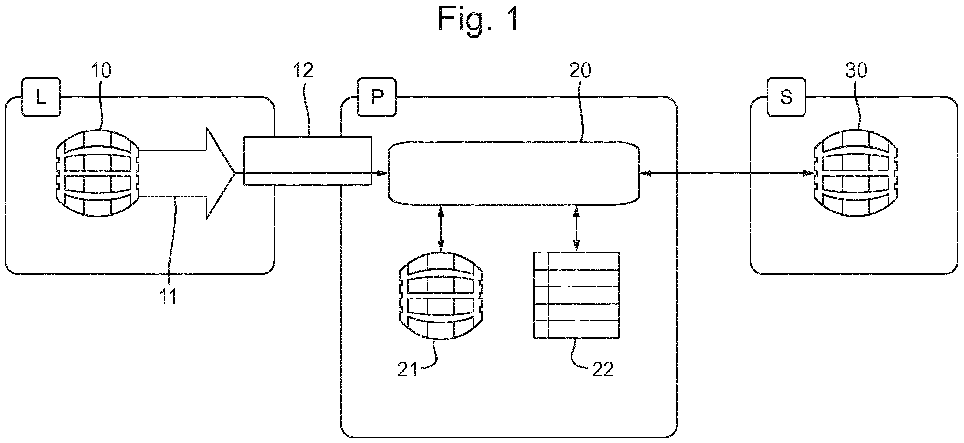

Figure 1 illustrates at a high level an exemplary embodiment of the invention, which is based on three servers.

The live server L runs a production database 10 which is used by an application whose activities are to be logged. Live server L includes an audit streamer 11 which generates a log 12 of standard form, e.g. a sequential list of commands. The audit streamer 11 may also be referred to as an activity logger and may be built into the database system or the operating system of the live server L. The audit streamer does not perform any intensive processing so does not impose a significant load on the live server.

The provenance server P receives the log 12 from the live server L, and includes a parser 20 which parses the events of the log. The events are logged into a provenance database 21 and a provenance blockchain 22.

Shadow server S is a server used for determining the impact of the events recorded in the log. Shadow server S maintains a shadow database 30. Desirably it is of the same size as the live server L, as all the commands run on the main server also run on this one.

Desirably, the connection streaming the audit events from the live server L to the provenance server P is secure, e.g. over an SSH tunnel, to ensure secrecy and prevent interception or spoofed audit events. The connection from the provenance server P to the shadow server S is desirably also secure, e.g. using SSL, to prevent interception or modification.

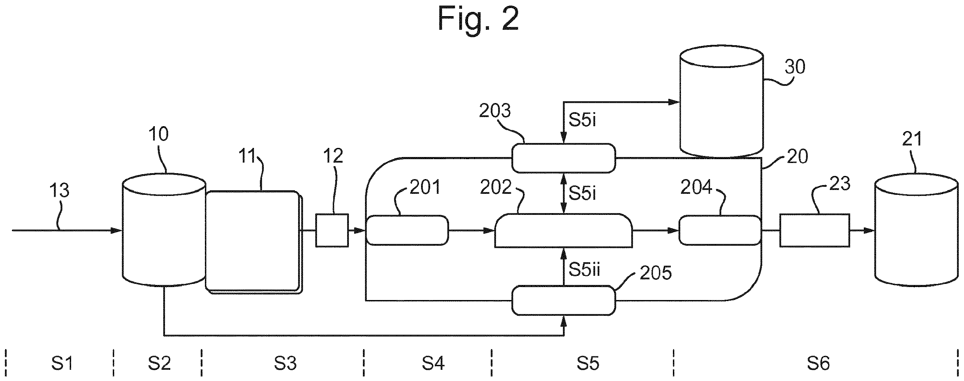

The method of an embodiment of the invention is shown in outline in Figure 2 and described below with reference to an example of updating a set of records in a database based on a condition. Production database 10 can be based on any database architecture, e.g. SQL or NoSQL, and stores information concerning a plurality of objects, e.g. users.

In step S1, an action command 13 is received by the production database. Action command 13 defines an action (for example archive a record or schedule a machine for servicing) and a condition (for example the record has not been accessed for a predetermined period or the machine has performed a predetermined number of activities). Other types of command can also be processed. The production database 10, when it receives this command, performs the action on the relevant records for all objects (e.g. records or vehicles) that satisfy the condition, for example the record is archived or an entry made in a servicing schedule.

The activity logger 11 captures an event from an action command and records it, however, the complete list of records affected (in this case the list of customers that met the condition and were issued the refund) is not recorded in conventional programs and is not necessary for the present invention. In some cases a total number of database rows affected may be given.

The log event 12 is captured by the parser 20. Input formatter 201 normalises the formatting of the event so it can be used by the causality-relationship generator (CRG) 202. The CRG has an up-to-date entity map 205 detailing the relationships between entities in the production database 10. The entity map 205 also provides information about what entities (including agents) it is desired to track closely.

For each log event 12, the CRG 202 requests an impact analyser 203 to provide detailed information of which entities were affected by the event. The impact analyser 203 uses a shadow data store (a shadow copy of the data store) to identify the entities, e.g. the customers whose data were read and updated, back to the CRG 202. The CRG 202 then uses the entity map 205 to build an entity based provenance record 23. Basically, this record maps the impact analysis into a relationship where the focus is the entity. The entity based provenance is then formatted by target formatter 204 for the target data store 21 (e.g. SQL and/or NoSQL).

An advantage of the present invention is that data evolution is captured - so it is possible to identify the progression of an error or attack, e.g. for forensic purposes. Also, the present invention enables efficient and immediate identification of actions impacting specific entities, which can be useful for a variety of purposes, including real time compliance analysis, proof that an organisation has acted on a 'Right to be Forgotten' request, and efficient 'Right to Access' request handling. Furthermore, the present invention can provide a real-time data auditing feed limited to a specific entity, which allows verification of data usage and data integrity.

Embodiments of the present invention can also enable efficient data breach assessment for example by rapidly identifying entities whose data has been compromised.

In an embodiment of the invention, the data stored in the entity based provenance record 23 is kept to a minimum necessary to identify entities affected by an action, in order to minimise data storage requirements in the target data store 21. However, by storing additional information, such as the change or delta caused by the action, the transformations recorded in the entity based provenance record 23 can also be used to revert a database state back to a point of time in past. In other words, the present invention can provide a roll-back mechanism and/or a mechanism to restore data if a portion of it is lost (data recovery).

Use of a provenance system according to the invention to enable recovery of data in a database management system will now be described. The provenance system maintains an entity-specific total history of data and activities performed on the data. Because of this recorded history, any changes to the original database are recorded and can be used to reconstruct the data if partial or complete data is corrupted, for example by a malicious entity or an unforeseeable error/event.

To illustrate this further, we take an example of user data to highlight the recovery feature. Data related to a user name 'x' is entered into the database that is being supported by the provenance system mechanism. The inclusion of the data related to the user 'x' is recorded in the provenance system, along with any activity performed on the data. Examples of activities performed include reading, updating, and modifying data as required by the data custodian (organisation that is managing the user data). The provenance system maintains full history, meaning that it keeps the track of how data evolved over time related to a single entity and also of all entities in the system.

At this point, two situations can arise:

1) user 'x' data gets corrupted (due to malicious or non-malicious activities) and
2) partial or full loss of data.

In the first case, consider that at a time t1, either due to a malign or non-malign intentions, the record of the user 'x' gets changed/updated. At point t2, on finding out inconsistencies or incorrect information being recorded in the system. The changes in the record can be reverted back to the state on t1. Not only this, but also any reports produced or any analysis built using the corrupt data can also be identified so those can be rectified.

In the second case, of partial or complete database corruption, the provenance system would be able to backtrack the database to a non-corrupted state. For example, at t1, if the database was at a correct state, then due to a malign or non-malign activity the database become corrupted at t2. The provenance system enables the data custodian to backtrack the changes to the data, fine-tuned to either time based or event based back tracking, giving the ability to the data custodian to return to a database state in past as required. Furthermore, the same feature can also be used to completely construct the database in case the full database is lost.

Another use of a provenance system according to an embodiment of the invention is to asses the impact of a data breach. Traditional technological solutions are inefficient in identifying the impact of a data breach. This is one of the major reasons why post data breach, organisations have to take a long period to assess what information pertinent to their consumers has been leaked.

The problem stems from the necessity to traverse sequential log files and try to assess what happened. This problem is compounded if the malicious user has performed some queries and then deletes the target records from the database. Now that the actual data on which initial queries were performed is no longer present, the extent of the impact is unclear. For this reason, forensic experts have to go back to the database backups before the compromise and try to build an accurate picture of the database at the time of the initial queries - to assess the extent of damage the data breach has caused.

However, the provenance system has the activity and the impact repository enables an efficient retrieval of assessment of the extent of the data breach damage - even if the malicious user deleted the information from the database. This process would not require any human inference in terms of tracking back the state of the database at the time of the breach and then building a picture - as carried out by the forensics expert at present.

Another potential application of a provenance system of the invention is consumer centric data auditing (CCDA). CCDA is not feasible with current systems. CCDA as implemented using the present invention empowers individual consumers not only to see what is happening to their data in near real-time but also to have the ability to evaluate whether the actions performed on their data are in line with an EULA and/or data-management regulations.

The provenance system transforms the log entries into impact assessments per entity in the system, so it is easy to access the users' data package to see all the actions performed on his/her data - in an efficient and cost-effective way. The CCDA then takes the EULA and data-management regulations and evaluate whether all the activities and impacts collected in the entity package are in conformance to a stated EULA and data-management regulations. In case of a violation, a notification is raised for the user with a detailed report of how the actions performed on her data were in violation. One thing to note is that to provide integrity to the entity packages in the provenance system, they are locked into a blockchain, enabling the CCDA to independently verify their integrity.

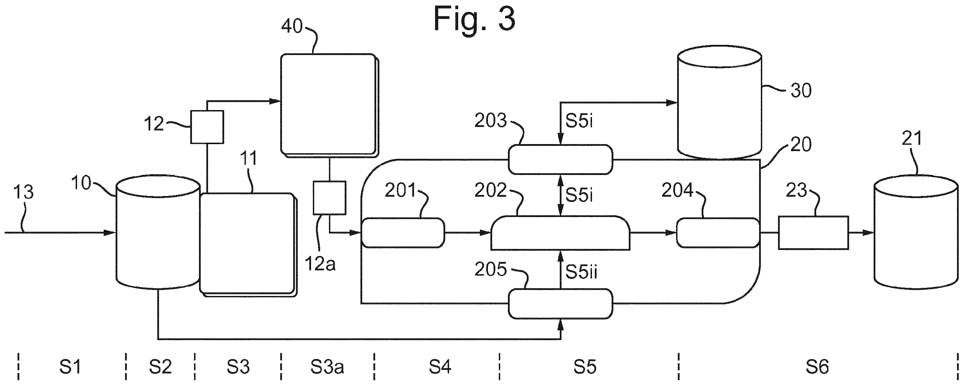

Another embodiment of the invention, in which data activities are masked and de-masked to increase security and privacy, is shown in Figure 3. In this embodiment parts and steps that are the same as in the preceding embodiments are indicated with like references and are not described further. The masking and demasking activities relate to the operations performed at step S3a in Figure 3. In step S3, the log activities 12 are collected from the production database 10 and transferred to the transformation module 40.

The main objective of the mask/de-masking activity is to reduce the exposure of sensitive data, such as personal identifiable information (PII). The Masking/De-masking mechanism provides a privacy screen through the following steps:

- Enrolment phase
- Masking
- De-masking

In the enrolment phase, the data custodian identifies the attributes related to entities that it would like to mask. The data custodian can opt for masking all attributes or a subset of them. Once the set of attributes are decided, the masking module installed on the data custodian data-centre would generate a set of masking/de-masking keys. These keys are used for masking the data attributes - when communicated from data custodian's data-centre to the data transformation system (step 3 onwards in figure 3).

The masking mechanism 40 has two functions. Firstly conditional statements are transformed to equality statements. For example, if a query is being made about the number of users that travelled between 18 and 20 July (18<query<20), it would be transformed to equality queries with conditions travelled on 18, or 19, or 20 July. Secondly, the mask is applied to individual attributes related to an entity. The masking technique can be a simple symmetric encryption. The masking is applied to data attributes that are going to be stored in the provenance system - this makes sure that the provenance system does not contain any sensitive information but still has the ability to provide previously mentioned functions. Only the data custodian has the ability to de-mask the information.

The masking/demasking function limits the regulation compliance the provenance system has to make and also limits any damage if the provenance system is compromised. The impact analysis is then performed based on the masked attributes without knowing the actual data. This impact analysis, especially in the case of a query that has a conditional statement specifying a range, is enabled by the transforming activity carried out by the masking mechanism. The other operations of the provenance system are not affected by the use of the masking/de-masking mechanism.

The data custodian can then query the provenance system to get the relevant information. For example, it can request the information stored about a particular user from the provenance system. The request has to be made via the masking mechanism as it applies the appropriate mask that would identify the relevant user in the provenance system. The provenance system will provide all the data stored (in masked format) to the data custodian that can use the de-masking process to converted the masked data back to the normal data. De-masking and masking functions are basically part of the same system and have access to the same set of masking/de-masking keys.

This is shown in more detail in Figure 3, in which all steps are the same as in Figure 2, except the introduction of step 3a.

If, for example, the activity logger 11 has captured an action 12 which is a query with a condition that if charge is greater then 'C', then select the record detail. The number and details of records returned by the system is however not captured. The masking module 40 performs a transformation function on the search query (which may also be referred to as a mapping function). The transformation function obtains the set of values stored in for the selected attribute (charge in this case) in the database and determines which of those values meet the condition of the search query (for example, the set of values stored in the attribute value set that are greater than 'C'), which may be referred to as a query set. The transformation function then generates a masking set that matches the condition by applying the masking function to the query set using the masking key. The original "greater than" condition is converted to an "equal to" condition. The masking function then sends both queries: the un-transformed query that was actually executed on the production database and the transformed query that can be used for impact analysis. The un-transformed query is stored in the provenance system and the transformed query is processed for impact analysis. The provenance system only retains a record of the un-transformed query and its relation to the entity data that was impacted by it.

It is also possible to apply partial masking, meaning that only the crucial PII information is masked and other information (for example information that a group of entities might have in common, like age, income, and charged-amount) can remain un-masked. This simplifies the transformation function of the masking mechanism.

When accessing the data from the provenance system, the query has to go through masking so the data in the provenance system can be correctly identified. For example, user name 'John' might be masked to 'U302H0SN', so search for 'John' in the provenance system will not find any record. The search has to be made for 'U302H0SN'. Once the result of the search is back, the data custodian can then use the masking key to demask the data.

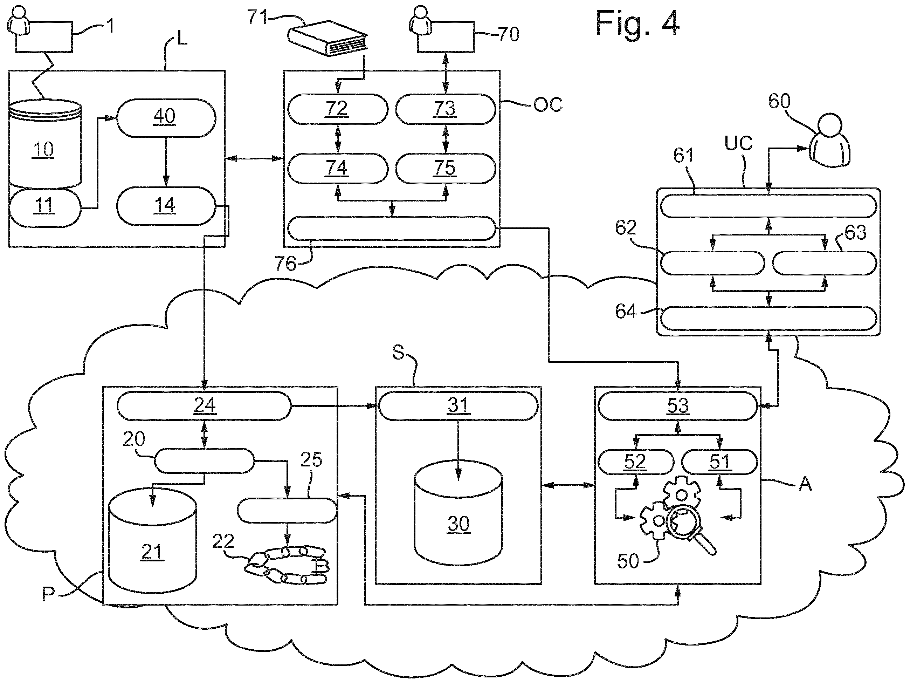

A further embodiment of the present invention is shown in more detail in Figure 4. In addition to the features described above, the embodiment of Figure 4 also includes an audit server A, an organisational compliance portal OC and a user compliance portal UC. Communications between the various servers and portals are managed by secure interfaces 14, 24, 31, 53, 64, 76, which can utilise SSH or SSL protocols for example.

In the provenance server P, blockchain constructor 25 records the entity-based provenance record 23 into a blockchain 22 to provide proof against falsification and tampering. Blockchain 22 can be a private blockchain or a public blockchain. Blockchain 22 may be dedicated to storage of entity based provenance records 23 or a general-purpose distributed object storage.

In an embodiment, the entity-based provenence record 23 is stored in a public blockchain in encrypted form so that an affected entity (e.g. a specific user) can read only their own related information. A key-pair per user can be employed so that only the provenance server can write data and only the specific user can read data. In the event that the blockchain is a smart blockchain, a smart contract can be provided to enable a user to automatically audit and/or verify their data stored in the public blockchain. In the event that the operator of the data processing system is required to delete (forget) data relating to an entity, the operator can simply delete (if it had them in the first place) the key(s) necessary to decode the entity-based provenance records 23, since the data itself cannot be deleted from the public blockchain.

As an alternative, by selective masking and/or encryption of personally-identifiable information, entity-based provenence records 23 can be made available to a third party in a manner that allows the third party to audit or verify the proper handling of the personally-identifiable information with out actually accessing the personally-identifiable information.

The organisational compliance portal OC is used for overall management of the system and may receive user requests 70 and organisational policies and/or regulations 71. In response to organisational policies, an organisational request handler 72 together with a policy extractor and audit dashboard 74 is used to manage which actions are processed by the activity logger 11 and which data types are masked by the masker 40. A user request handler 73 and a user response constructor 75 are used to respond to requests, e.g. for all data and processing actions relating to a specific entity (e.g. a user).

User compliance portal UC is provided to allow a user 60 to make requests relating to the provenance of data stored and processed by the production database 10. A user portal 60 (e.g. a website) allows a user to make requests to the data provenance system and provides information to the user in response to such requests or predefined alerts. A data activity monitor 63 monitors all activity impacting the user's data and can provide reports on demand or non schedule. A data compliance monitor determines whether processing of a user's data is in accordance with compliance rules and provides alerts accordingly. Data compliance rules may be set by a user, by the organisation or derived from relevant laws and regulations.

Audit server A includes an activity and compliance auditing module 50 that communicates with the shadow server S and provenance server P to generate entity data activity reports 51 and compliance report 52.

The present invention has been described above by reference to exemplary embodiments however it is to be understood that the present invention is not to be limited by the preceding description but rather by the appended claims. The methods of the present invention can be implemented in whole or part on general purpose computing devices or special purpose hardware, such as ASICs. Although the invention has been described above with various different servers and/or client computers fulfilling different functions, it will be appreciated that the functions may be distributed differently amongst more or fewer computers. Also the various servers and client computers may be implemented as virtual machines hosted by one or more host computers. For scalability, multiple instances of the various servers may be employed. The methods and algorithms of the invention can be embodied in a computer program comprising code means for instructing one or more computing devices and recorded on non-transitory computer-readable storage media.

**Claims**

**1.** An automated method of creating a log of events, the method comprising:

receiving an activity log comprising a series of commands performed by a data processing system;

determining, by reference to an entity map of the data processing system, impacted entities, an impacted entity being an entity relating to an affected data record, an affected data record being a record with which a command of the activity log has interacted;

constructing event-impact records each relating a command, an affected data record and an entity.

2. A method according to claim 1 wherein the entity map describes relationships between entities having records in the data processing system.

3. A method according to claim 1 or 2 wherein determining the impacted entity comprises performing the command against a shadow database.

4. A method according to claim 3 wherein the shadow database has the same structure as a database managed by the data processing system.

5. A method according to claim 4 wherein records in the shadow database are truncated.

6. A method according to any one of claims 3 to 5 wherein sensitive data in the shadow database is masked.

7. A method according to any one of the preceding claims wherein an event-impact record relates a series of commands to an entity.

8. A method according to any one of the preceding claims wherein determining an impacted entity comprises determining each entity relating to each data record affected by the command and constructing an event-impact record comprises constructing an event-impact record for each impacted entity.

9. A method according to any one of the preceding claims wherein an affected data record is a data record that is created, read, modified, and/or deleted by the command.

10. A method according to any one of the preceding claims further comprising using the event-impact records to identify all commands that impacted a given entity.

11. A method according to any one of the preceding claims further comprising restoring altered or omitted data in the data processing system using the event-impact records.

12. A method according to any one of the preceding claims further comprising masking sensitive data in in the activity log prior to determining impacted entities.

13. A method according to claim 12 further comprising transforming a query included in a command into a masked query.

14. A method according to claim 13 further comprising demasking results returned by executing the masked query.

15. A computer system comprising one or more computing devices and program code means that, when executed by the one or more devices, effects the method of anyone of the preceeding claims.

Fig. 1

Fig. 2

Fig. 3

Fig. 4

Europäisches
Patentamt

European
Patent Office

Office européen
des brevets

## EUROPEAN SEARCH REPORT

**Application Number**

EP 17 20 4748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2005/097149 A1 (VAITZBLIT LEV [US] ET AL) 5 May 2005 (2005-05-05)<br>* abstract; figures 1-12 *<br>* paragraph [0001] - paragraph [0020] *<br>* paragraph [0034] - paragraph [0145] *<br>* the whole document * | 1-5,<br>7-11,15<br>6,12-14 | INV.<br>G06F17/40<br><br>ADD.<br>G06F11/07<br>G06F11/34 |
| X<br>Y | US 2007/118534 A1 (HAYES SCOTT [US] ET AL) 24 May 2007 (2007-05-24)<br>* abstract; figure 1 *<br>* paragraph [0002] - paragraph [0006] *<br>* paragraph [00^9] - paragraph [0034] *<br>* the whole document * | 1-5,<br>7-11,15<br>6,12-14 | |
| X<br>Y | US 2014/165133 A1 (FOLEY SEAN C [US] ET AL) 12 June 2014 (2014-06-12)<br>* abstract; figures 1-6 *<br>* paragraph [0037] - paragraph [0085] *<br>* the whole document * | 1-5,<br>7-11,15<br>6,12-14 | |
| Y | US 2009/019092 A1 (DETTINGER RICHARD DEAN [US] ET AL) 15 January 2009 (2009-01-15)<br>* abstract; figures 1-4 *<br>* paragraph [0005] - paragraph [0009] *<br>* paragraph [0020] - paragraph [0021] *<br>* the whole document * | 6,12-14 | **TECHNICAL FIELDS SEARCHED (IPC)**<br><br>G06F |
| Y | US 2016/292592 A1 (PATTHAK ANINDYA CHANDRA [US] ET AL) 6 October 2016 (2016-10-06)<br>* paragraph [0054] *<br>* the whole document * | 6,12-14 | |
| A | WO 2007/014268 A2 (SPLUNK INC [US]; BAUM MICHAEL J [US]; CARASSO DAVID [US]; DAS ROBIN K) 1 February 2007 (2007-02-01)<br>* abstract; figures 1-5 *<br>* paragraph [0003] - paragraph [0022] *<br>* the whole document * | 1-15 | |

The present search report has been drawn up for all claims

| Place of search | Date of completion of the search | Examiner |
|---|---|---|
| Munich | 6 August 2018 | Bozas, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 4748

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2018

| Patent document cited in search report | | | Publication date | Patent family member(s) | | | Publication date |
|---|---|---|---|---|---|---|---|
| US 2005097149 | A1 | | 05-05-2005 | NONE | | | |
| US 2007118534 | A1 | | 24-05-2007 | NONE | | | |
| US 2014165133 | A1 | | 12-06-2014 | US | 2014165133 | A1 | 12-06-2014 |
| | | | | US | 2014165189 | A1 | 12-06-2014 |
| | | | | US | 2015326616 | A1 | 12-11-2015 |
| | | | | US | 2018063196 | A1 | 01-03-2018 |
| | | | | US | 2018139243 | A1 | 17-05-2018 |
| US 2009019092 | A1 | | 15-01-2009 | NONE | | | |
| US 2016292592 | A1 | | 06-10-2016 | CN | 107660283 | A | 02-02-2018 |
| | | | | EP | 3278243 | A1 | 07-02-2018 |
| | | | | US | 2016292166 | A1 | 06-10-2016 |
| | | | | US | 2016292263 | A1 | 06-10-2016 |
| | | | | US | 2016292592 | A1 | 06-10-2016 |
| | | | | US | 2016294649 | A1 | 06-10-2016 |
| | | | | US | 2016378577 | A1 | 29-12-2016 |
| | | | | US | 2017004185 | A1 | 05-01-2017 |
| | | | | US | 2018004824 | A1 | 04-01-2018 |
| WO 2007014268 | A2 | | 01-02-2007 | US | 2007118491 | A1 | 24-05-2007 |
| | | | | US | 2011208743 | A1 | 25-08-2011 |
| | | | | US | 2013054596 | A1 | 28-02-2013 |
| | | | | US | 2014149438 | A1 | 29-05-2014 |
| | | | | US | 2014237337 | A1 | 21-08-2014 |
| | | | | US | 2015142842 | A1 | 21-05-2015 |
| | | | | US | 2015143522 | A1 | 21-05-2015 |
| | | | | US | 2015149460 | A1 | 28-05-2015 |
| | | | | US | 2015154250 | A1 | 04-06-2015 |
| | | | | US | 2015227612 | A1 | 13-08-2015 |
| | | | | US | 2015227613 | A1 | 13-08-2015 |
| | | | | US | 2015227614 | A1 | 13-08-2015 |
| | | | | US | 2015317377 | A1 | 05-11-2015 |
| | | | | US | 2016156667 | A1 | 02-06-2016 |
| | | | | US | 2016246873 | A1 | 25-08-2016 |
| | | | | US | 2016255108 | A1 | 01-09-2016 |
| | | | | US | 2017140033 | A1 | 18-05-2017 |
| | | | | US | 2018159885 | A1 | 07-06-2018 |
| | | | | WO | 2007014268 | A2 | 01-02-2007 |

EPO FORM P0459

For more details about this annex : see Official Journal of the European Patent Office, No. 12/82